# EUROPÄISCHE PATENTSCHRIFT

(11) **EP 1 273 829 B1**
(45) Veröffentlichungstag und Bekanntmachung des Hinweises auf die Patenterteilung: **02.11.2006**
(21) Anmeldenummer: 02013225.4
(22) Anmeldetag: 15.06.2002
(51) Int. Cl.: F16H 57/04, F16H 57/02

(54) **Entlüftungseinrichtung für ein Getriebegehäuse**
Venting system for transmission casing
Dispositif d'aération pour une boîte de vitesses

(30) Priorität: 05.07.2001 DE 10132739
(43) Veröffentlichungstag der Anmeldung: 08.01.2003
(73) Patentinhaber: DEERE & COMPANY, Moline, Illinois 61265-8098 (US)
(72) Erfinder: Rimkus, Manfred, 68199 Mannheim (DE); Schäfer, Helmut, 68775 Ketsch (DE)
(74) Vertreter: Lau-Loskill, Philipp

(56) Entgegenhaltungen:
- EP-A- 0 159 105
- EP-A- 0 406 649
- DE-A1- 19 820 881
- DE-A1- 19 939 357

## Beschreibung

Die Erfindung betrifft eine Entlüftungseinrichtung für ein Getriebegehäuse, durch welches sich wenigstens eine Getriebewelle erstreckt und welches einen tief liegenden Sammelbereich aufweist, in dem sich Schmier- und/oder Kühlflüssigkeit sammelt. Der Sammelbereich steht über wenigstens einen Verbindungskanal mit einem ansonsten im Wesentlichen gegenüber dem Getriebegehäuse abgedichteten Vorratsbehälter in Verbindung. Die Flüssigkeit im Sammelbereich wird infolge eines in dem Getriebegehäuse herrschenden Überdrucks durch den Verbindungskanal in den Vorratsbehälter gedrückt.

Um Planschverluste zu vermeiden, ist es bekannt, den Innenraum eines Getriebes unter Überdruck zu setzen. Durch den Überdruck wird die infolge Schmierung und Leckagen eindringende Schmierund/oder Kühlflüssigkeit, die sich in einem tief liegenden Sammelbereich des Getriebegehäuses sammelt, über einen im Bodenbereich des Getriebegehäuses liegenden Verbindungskanal in einen Vorratsbehälter zurückgefördert. Abgesehen von dem Verbindungskanal ist zur Aufrechterhaltung des Überdrucks das Getriebegehäuse insbesondere im Bereich der Drehdurchführungen abgedichtet. Durch den Überdruck im Getriebegehäuse stellt sich im Betrieb tendenziell ein höherer Flüssigkeitsspiegel im Vorratsbehälter ein als bei Stillstand, wenn kein Überdruck herrscht. Nach Abstellen eines dem Getriebe vorgeschalteten Antriebsmotors baut sich der Überdruck jedoch nur sehr langsam ab, so dass es eine geraume Zeit dauert bis über den unten liegenden Verbindungskanal ein Flüssigkeitsaustausch stattfindet und sich ein stationärer Flüssigkeitsstand im Getriebegehäuse und im Vorratsbehälter einstellt. Diese Zeitverzögerung kann zu Fehleinschätzungen bei der Kontrolle des Flüssigkeitsstandes führen. Die EP-A-0159105 zeigt die Merkmale des Oberbegriffs von Anspruch 1.

Die der Erfindung zugrunde liegende Aufgabe wird darin gesehen, eine Entlüftungseinrichtung der eingangs genannten Art anzugeben, durch die mit einfachen Mitteln nach einem Abstellen des Getriebes ein rascher Flüssigkeitsausgleich erfolgt, so dass sich schon kurze Zeit nach einer Betriebsunterbrechung der .Flüssigkeitsspiegel zuverlässig ermitteln lässt.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß mündet in ein Getriebegehäuse der eingangs genannten Art in einen oberhalb des Sammelbereichs liegenden Bereich ein Entlüftungskanal, der eine Absperreinrichtung enthält. Die Absperreinrichtung ist derart ausgelegt, dass sie bei laufender Getriebewelle den Entlüftungskanal automatisch schließt und bei stehender Getriebewelle den Entlüftungskanal automatisch öffnet.

Die Absperreinrichtung sorgt damit nach dem Abstellen eines das Getriebe antreibenden Antriebsmotors für einen raschen Abbau des Luftüberdrucks im Getriebegehäuse, indem ein im oberen Getriebebereich mündender Entlüftungskanal geöffnet wird. Der Entlüftungskanal kann das Getriebegehäuse mit einem benachbarten Fahrzeugachsgehäuse, beispielsweise einem Differentialgehäuse, welches als Vorratsbehälter dient, verbinden, so dass ein Druckluftausgleich zwischen dem Getriebegehäuse und dem Vorratsbehälter erfolgt. Der Öffnungsquerschnitt kann beispielsweise einem Kreisdurchmesser von 6 mm entsprechen. Dies macht es möglich, dass unmittelbar nach dem Abstellen des Antriebsmotors ein rascher Druckausgleich und damit ein Ausgleich des Flüssigkeitsstandes erfolgt, so dass bereits kurze Zeit nach dem zur Ruhe kommen des Getriebes eine zuverlässige Kontrolle des Flüssigkeitsspiegels vorgenommen werden kann. Beim Start des Antriebsmotors wird der Verbindungskanal sofort wieder dicht verschlossen, um einen raschen Druckaufbau zu ermöglichen.

Grundsätzlich könnte ein sich zwischen dem Getriebegehäuse und einem Fahrzeugachsgehäuse erstreckender Entlüftungskanal auch während des Betriebs des Getriebes geöffnet sein. Hierdurch wäre eine Dauerleckage gegeben, die einen schnellen Ausgleich nach dem Abstellen des Getriebes ermöglicht. Diese Lösung hätte jedoch die nachteiligen Folgen, dass durch die Dauerleckage bei niedrigen Drehzahlen und kalter Flüssigkeit die Leistungsfähigkeit einer den Überdruck aufrechterhaltenden Luftpumpe vermindert würde. Speziell beim Kaltstart könnte auch ein Leersaugen des Fahrzeugachsgehäuses auftreten.

Bei dem Getriebe handelt es sich vorzugsweise um ein Lastschaltgetriebe oder um ein stufenloses Getriebe für ein Arbeitsfahrzeug, wie es beispielsweise aus der DE-A-100 47 402 hervorgeht. Zur Aufrechterhaltung des Luftdrucks im Betrieb sind insbesondere die Drehdurchführungen der Eingangs- und Ausgangswellen gegenüber dem Getriebegehäuse abgedichtet.

Das Getriebe ist zweckmäßigerweise an ein Achsgetriebegehäuse, das ein Differentialgetriebe für eine Fahrzeugachse beherbergen kann, angeflanscht. Das Achsgetriebegehäuse bildet gleichzeitig den Vorratsbehälter für die Schmier- und Kühlflüssigkeit. Das Achsgetriebegehäuse kann eine ins Freie mündende Entlüftungsöffnung enthalten, so dass der Innenraum unter Atmosphärendruck steht.

Zur Aufrechterhaltung eines Überdrucks im Getriebegehäuse ist zweckmäßigerweise eine Luftpumpe vorgesehen, die vorzugsweise durch eine Getriebewelle angetrieben wird. Die Luftpumpe saugt beispielsweise aus dem Fahrzeugachsgehäuse Luft an und pumpt diese in das Getriebegehäuse.

Gemäß einer bevorzugten Ausgestaltung der Erfindung wird das Öffnen und Schließen des Entlüftungskanals durch einen Flüssigkeitsstrom oder eine Flüssigkeitsbarriere gesteuert. Hierbei ist es zweckmäßig, dass der Entlüftungskanal in etwa horizontal derart in eine von Schmier- oder Kühlflüssigkeit durchströmte Fallleitung mündet, dass der Flüssigkeitsstrom den Entlüftungskanal verschließt. Vorzugsweise enthält der Entlüftungskanal an seiner Einmündung eine Drossel von ca. 1 mm Durchmesser. Die Fallleitung verläuft in etwa senkrecht und wird über eine Rücklaufleitung mit Schmier- oder Kühlflüssigkeit versorgt und von oben nach unten durchströmt. Bei laufendem Getriebe wird ein vorhandener Teil-Flüssigkeitsstrom aus einer Hydraulikversorgung durch die Rücklaufleitung und die Fallleitung geleitet, um den Entlüftungskanal abzusperren und somit eine Belüftung des Getriebegehäuses zu verhindern. Bei Stillstand wird der Flüssigkeitsstrom unterbrochen und es kann Luft über die Fallleitung und die Einmündung in den Entlüftungskanal eintreten, so dass das Getriebegehäuse belüftet wird. Wenn die Fallleitung in das Fahrzeugachsgehäuse mündet erfolgt eine Belüftung des Getriebegehäuses zum Fahrzeugachsgehäuse hin.

Hierbei ist es von Vorteil, wenn die Fallleitung mit einer durch eine Getriebewelle angetriebenen Hydraulikpumpe versorgt wird. Die Hydraulikpumpe befindet sich dabei beispielsweise in einem Hinterachsgehäuse, in das sich die Getriebewelle erstreckt.

Zweckmäßigerweise dient die Hydraulikpumpe vorrangig der Versorgung eines hydraulischen Verbrauchers, z. B. eines an das Arbeitsfahrzeug montierten Arbeitsgerätes. Dabei wird ein Teilstrom der Hydraulikflüssigkeit für die Fallleitung abgezweigt. Die Konsistenz der Hydraulikflüssigkeit und der Schmier- und Kühlflüssigkeit des Getriebes können gleich sein, so dass beide dem gleichen Vorratsbehälter entnommen werden können.

Um den Flüssigkeitsrückstrom durch die Rücklaufleitung und die Fallleitung zu begrenzen und einstellen zu können, kann in der Rücklaufleitung eine Drosselstelle vorgesehen sein.

Gemäß einer weiteren bevorzugten Ausgestaltung der Erfindung wird das Öffnen und Schließen des Entlüftungskanals durch einen Pilotdruck gesteuert. Zu diesem Zweck ist es von Vorteil, wenn in dem Entlüftungskanal ein Entlüftungsventil angeordnet ist, welches bei laufender Getriebewelle schließt und bei stehender Getriebewelle öffnet. Das Entlüftungsventil kann grundsätzlich elektrisch gesteuert werden, indem es beispielsweise in den Zündkreis des Antriebsmotors eingebunden ist. Eine bevorzugte Ausgestaltung ergibt sich jedoch durch die Verwendung eines hydraulisch durch den Versorgungsdruck gesteuerten Entlüftungsventils.

Vorzugsweise wird das Entlüftungsventil hydraulisch durch den Getriebeversorgungsdruck derart gesteuert, dass es bei anstehendem Getriebeversorgungsdruck schließt und bei fehlendem Druck durch die Kraft einer Rückstellfeder öffnet.

Dabei können bevorzugt der im Getriebe vorhandene Schmierund/oder Kühlflüssigkeitsdruck oder der Pumpen- bzw. Systemdruck als Pilotdruck verwendet werden, um einen Ventilschieber oder ein Sitzventil gegen die Wirkung einer Rückstellfeder im Sinne des Schließens der Entlüftung zu verschieben. Die Auslegung erfolgt zweckmäßigerweise derart, dass bei einem Start des Antriebsmotors das Entlüftungsventil spätestens zehn Sekunden nach Erreichen der Leerlaufdrehzahl geschlossen ist. Bei Abfall des Pilotdrucks, insbesondere infolge des Abstellens des Antriebsmotors, verschiebt die Rückstellfeder das Entlüftungsventil in Öffnungsrichtung, so dass der Luftüberdruck im Getriebegehäuse abgebaut wird und sich der Druck innerhalb weniger als einer Minute nach Abstellen des Antriebsmotors dem atmosphärischen Druck im Fahrzeugachsgehäuse angleicht. Bei kurzeitigem Absinken des Schmier- und Kühlmitteldrucks im Betrieb, etwa infolge von Schaltvorgängen im Getriebe oder von Druckschwankungen, soll jedoch eine Öffnung des Entlüftungsventils sicher vermieden werden.

Es ist von Vorteil, wenn die hydraulische Versorgungspumpe durch eine Getriebewelle angetrieben wird und der Ausgangsdruck der Versorgungspumpe auch auf das Entlüftungsventil einwirkt, um dieses zu öffnen bzw. bei fehlendem Druck zu schließen.

Gemäß einer bevorzugten Ausgestaltung der Erfindung ist der Entlüftungskanal zwischen dem Getriebegehäuse und einem Fahrzeugachsgehäuse, insbesondere einem Differentialgehäuse, angeordnet. Als bevorzugter Einbauraum für die Entlüftungsleitung kann der obere Bereich der Trennwand zwischen dem Getriebegehäuse und dem Fahrzeugachsgehäuse dienen.

Anhand der Zeichnung, die zwei Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine erste erfindungsgemäße Entlüftungseinrichtung für ein Getriebegehäuse mit einem pilotgesteuerten Ventil bei still stehender Getriebewelle und
- Fig. 2: eine zweite erfindungsgemäße Entlüftungseinrichtung für ein Getriebegehäuse mit einer Steuerung durch einen Flüssigkeitsstrom bei laufender Getriebewelle.

Ähnliche oder sich entsprechende Bauteile der in den Figuren dargestellten Einrichtungen wurden mit den gleichen Bezugszeichen versehen.

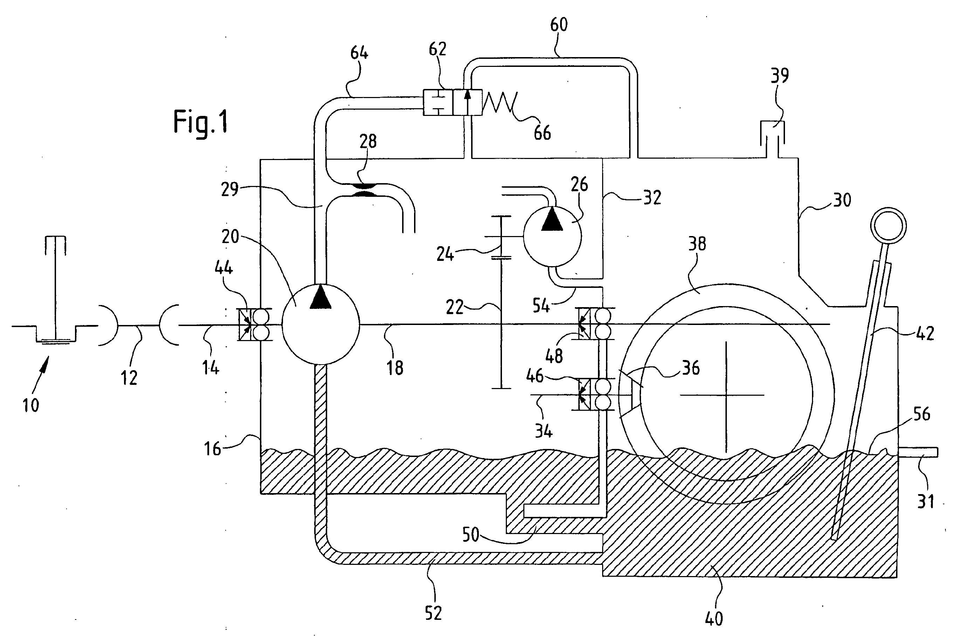

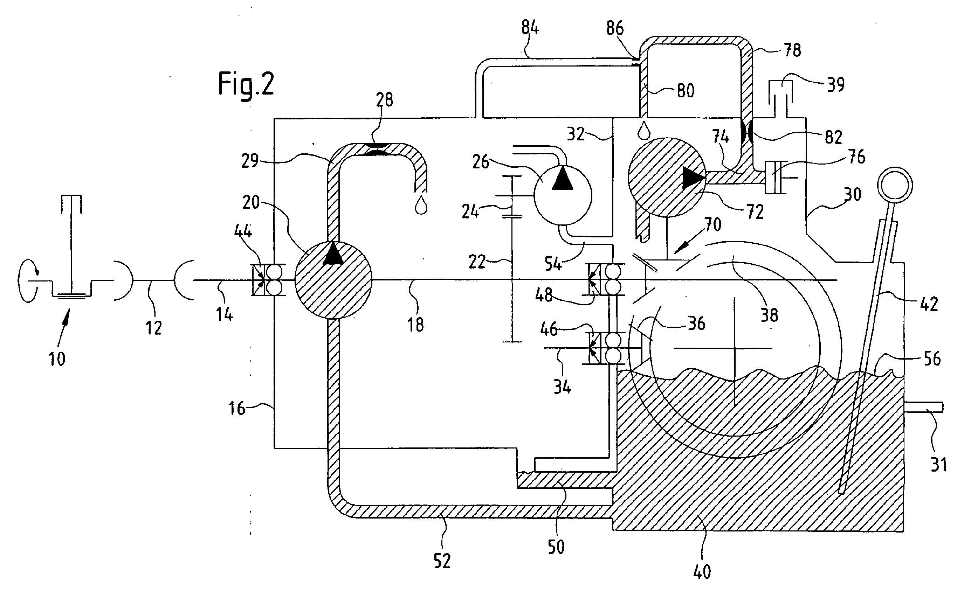

Die Figuren 1 und 2 zeigen je den Teil des Antriebsstrang eines Arbeitsfahrzeugs, beispielsweise eines Ackerschleppers. Ein lediglich schematisch dargestellter Verbrennungsmotor 10 treibt über eine Kardanwelle 12 die Eingangswelle 14 eines in einem Getriebegehäuse 16 untergebrachten Getriebes an. Es wurde lediglich eine Getriebewelle 18 des Getriebes angedeutet, die einerseits eine hydraulische Versorgungspumpe 20 und andererseits über ein Zahnradpaar 22, 24 eine Luftpumpe 26 antreibt.

Bei dem Getriebe kann es sich beispielsweise um ein bei Ackerschleppern übliches Lastschaltgetriebe oder um ein stufenloses hydraulisch-mechanisches Leistungsverzweigungsgetriebe, wie es zunehmend Verbreitung findet, handeln. Die Versorgungspumpe 20 dient vorrangig der Versorgung von Getriebekomponenten, beispielsweise von nicht näher dargestellten Kupplungen und Lagern, mit Schmier- und Kühlflüssigkeit, was durch die Drossel 28 in der Druckleitung 29 symbolisch angedeutet ist.

An das Getriebegehäuse 16 ist ein Hinterachs- oder Differentialgehäuse 30 angeflanscht, durch das sich die Getriebewelle 18 erstreckt, um beispielsweise eine Zapfwelle 31 anzutreiben, was jedoch nicht näher dargestellt wurde. Des Weiteren erstreckt sich durch die Trennwand 32 zwischen dem Getriebegehäuse 16 und dem Differentialgehäuse 30 eine Hauptwelle 34, deren Kegelrad 36 das Tellerrad 38 des Differentialgetriebes antreibt.

Im oberen Bereich des Differentialgehäuses 30 befindet sich eine Entlüftung 39, so dass das Innere des Differentialgehäuses unter Atmosphärendruck steht. Der untere Bereich des Differentialgehäuses 30 dient als Vorratsbehälter 40 für Hydraulikflüssigkeit, insbesondere für Schmier- und Kühlflüssigkeit. In das Differentialgehäuse 30 ragt ein Peilstab 42, durch den sich der Flüssigkeitstand im Vorratsbehälter 40 überwachen lässt. An Stelle des Peilstabes 42 können auch andere Mittel zur Füllstandskontrolle verwendet werden, beispielsweise ein Schauglas oder eine elektrische Füllstandsüberwachung.

Die Lagerstellen 44, 46, 48 der in das Getriebegehäuse 16 einund austretenden Wellen sind abgedichtet. Der untere durch das Getriebegehäuses 16 eingeschlossene Sammelbereich des Getriebes, in dem sich die Schmier- und Kühlflüssigkeit sammelt, steht über einen Verbindungskanal 50 mit dem Vorratsbehälter 40 des Differentialgehäuses 30 in Verbindung. Abgesehen von diesem Verbindungskanal 50 ist das Innere des Getriebegehäuses 16 im Wesentlichen allseits abgedichtet. Die Versorgungspumpe 20 steht über eine Versorgungsleitung 52 mit dem Vorratsbehälter 40 in Verbindung und wird aus diesem gespeist.

Die Luftpumpe 26 saugt über eine Ansaugleitung 54, die oberhalb des Flüssigkeitsspiegels 56 in dem Differentialgehäuse 30 mündet, Luft aus dem Differentialgehäuse 30 an, verdichtet diese und drückt sie in das Getriebegehäuse 16. Dadurch baut sich in dem Getriebegehäuse 16 ein Überdruck auf, der die sich unten sammelnde Schmier- und Kühlflüssigkeit verdrängt und über den Verbindungskanal 50 in das Differentialgehäuse 30 drückt. Hierdurch wird vermieden, dass sich Teile des Getriebes in Flüssigkeit bewegen und Planschverluste verursachen.

Sofern sich die Getriebewelle 18 dreht, treibt sie die Luftpumpe 26 an, so dass der Überdruck in dem Getriebegehäuse 16 aufrechterhalten wird. Bei ruhender Getriebewelle 18 wird zwar keine weitere Druckluft in das Getriebegehäuse 16 gepumpt, wegen der weitgehenden Abdichtung des Getriebegehäuses 16 wird jedoch der Überdruck in dem Getriebegehäuse 16 nur langsam abgebaut, so dass nur ein allmählicher Flüssigkeitsaustausch zwischen dem Getriebegehäuse 16 und dem Differentialgehäuse 30 stattfindet, wobei Flüssigkeit aus dem Vorratsbehälter 40'über den Verbindungskanal 50 in das Getriebegehäuse 16 fließt. Dies hat zur Folge, dass sich der Flüssigkeitsspiegel 56 im Differentialgehäuse 30 nur langsam auf ein Endniveau absenkt und eine zuverlässige Füllstandskontrolle erst nach längerer Zeit erfolgen kann.

Um bei ruhendem Getriebe einen rascheren Flüssigkeitsaustausch zu ermöglichen, so dass eine zuverlässige Füllstandskontrolle bereits nach kurzer Zeit durchgeführt werden kann, werden im Folgenden anhand der Figuren 1 und 2 zwei Absperreinrichtungen beschrieben, durch die bei ruhendem Getriebe eine rasche Entlüftung des Getriebegehäuses 16 erfolgen kann.

Gemäß Fig. 1 sind der obere Bereich des Getriebegehäuses 16 und der obere Bereich des Differentialgehäuses 30 durch einen Entlüftungskanal 60 miteinander verbunden. In dem Entlüftungskanal 60 ist ein Schieberventil 62 angeordnet. Der Ventilschieber steht einerseits über eine Leitung 64 mit der Druckleitung 29 in Verbindung und ist dem Versorgungsdruck der Versorgungspumpe 20 ausgesetzt, der den Ventilschieber in eine Schließstellung drängt. Andererseits ist der Ventilschieber dem Druck einer Rückstellfeder 66 ausgesetzt, die den Ventilschieber in eine Offenstellung drängt.

Wenn sich die Getriebewelle 18 dreht und die Versorgungspumpe 20 antreibt, wird ein Druck in der Druckleitung 29 und der Leitung 64 aufgebaut, der den Ventilschieber gegen die Kraft der Rückstellfeder 66 aus seiner offenen Stellung (wie dargestellt) in seine geschlossene Stellung drängt. Damit kann keine Entlüftung des Getriebegehäuses 16 über den Entlüftungskanal 60 erfolgen.

Wird der Verbrennungsmotor 10 abgestellt, so dass die Getriebewelle 18 still steht, so baut die Versorgungspumpe 20 keinen Druck auf, so dass die Druckleitung 29 und die Leitung 64 drucklos werden. Der Ventilschieber wird durch die Kraft der Rückstellfeder 66 in seine offene Stellung verschoben. Nun kann die Druckluft aus dem Getriebegehäuse 16 über den Entlüftungskanal 60 in das Differentialgehäuse 30 und von diesem über die Entlüftung 39 ins Freie entweichen. Gleichzeitig findet über den Verbindungskanal 50 ein Flüssigkeitsaustausch von dem Vorratsbehälter 40 in das Getriebegehäuse 16 statt. Wegen des relativ großen Querschnitts im Entlüftungskanal 60 erfolgen der Druckluftabbau und der Flüssigkeitsaustausch relativ rasch, so dass schon kurze Zeit nach Abstellen des Verbrennungsmotors 10 bzw. Stillsetzens der Getriebewelle 18 eine Flüssigkeitskontrolle mit Hilfe des Peilstabs 42 erfolgen kann.

Gemäß Fig. 2 wird durch die Getriebewelle 18 ein Kegelradgetriebe 70 und eine Hydraulikpumpe 72 angetrieben, die sich im Differentialgehäuse 30 befindet. Die Hydraulikpumpe 72 saugt Hydraulikflüssigkeit aus dem Vorratsbehälter 56 an und speist einen nicht näher dargestellten Hydraulikkreis 74, an den Arbeitsgeräte 76 angeschlossen sind. Von dem Hydraulikkreis 74 zweigt eine Rücklaufleitung 78 ab, die aus dem Differentialgehäuse 30 nach oben herausführt und U-förmig in eine Fallleitung 80 übergeht, die senkrecht nach unten gerichtet ist und wieder in das Differentialgehäuse 30 hinein führt. Um den Flüssigkeitsdurchfluss durch die Rücklaufleitung 78 auf ein notwendiges Maß zu begrenzen, ist in der Rücklaufleitung 78 eine Drosselstelle 82 vorgesehen.

In die Fallleitung 80 mündet seitlich ein horizontal ausgerichteter Entlüftungskanal 84, der mit einem oberen Bereich des Getriebegehäuses 16 verbunden ist. An der Einmündungsstelle verengt sich der Entlüftungskanal 84 zu einer Drosselstelle 86.

Wenn der Verbrennungsmotor 10 läuft, treibt die Getriebewelle 18 die Hydraulikpumpe 72 an, so dass sich ein Flüssigkeitsstrom durch die Rücklaufleitung 78 und die Fallleitung 80 zurück in das Differentialgehäuse 30 ausbildete Dieser Flüssigkeitsstrom verschließt die Einmündungsstelle des Entlüftungskanals 84, dessen Drosselstelle 86 entsprechend ausgelegt wird. Damit kann kein Druckausgleich von dem Getriebegehäuse 16 über den Entlüftungskanal 84 erfolgen.

Wird der Verbrennungsmotor 10 abgestellt, so kommt auch die Hydraulikpumpe 72 zur Ruhe und fördert keine Flüssigkeit durch die Rücklaufleitung 78 und die Fallleitung 80. Die Einmündungsstelle des Entlüftungskanals 84 wird damit freigegeben, so dass ein Druckausgleich von dem Getriebegehäuse über den Entlüftungskanal 84 und die Fallleitung 80 in das Differentialgehäuse 30 und von dort über die Entlüftung 39 ins Freie erfolgen kann. Auch bei dieser Ausgestaltung erfolgt ein relativ rascher Druckausgleich und Flüssigkeitsausgleich (wie dargestellt), so dass schon kurz nach Abstellen des Verbrennungsmotors bzw. Stillsetzen der Getriebewelle 18 eine zuverlässige Flüssigkeitskontrolle erfolgen kann.

Auch wenn die Erfindung lediglich anhand zweier Ausführungsbeispiele beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Entlüftungseinrichtung für ein Getriebegehäuse (16), durch welches sich wenigstens eine Getriebewelle (18) erstreckt und welches einen tief liegenden Sammelbereich aufweist, in dem sich Schmier- und/oder Kühlflüssigkeit sammelt und der über wenigstens einen Verbindungskanal (50) mit einem ansonsten im Wesentlichen gegenüber dem Getriebegehäuse (16) abgedichteten Vorratsbehälter (40) in Verbindung steht, wobei die Flüssigkeit im Sammelbereich infolge eines in dem Getriebegehäuse (16) herrschenden Überdrucks durch den Verbindungskanal (50) in den Vorratsbehälter (40) gedrückt wird, **dadurch gekennzeichnet, dass** in dem Getriebegehäuse (16) oberhalb des Sammelbereichs ein Entlüftungskanal (60, 84) mit einer Absperreinrichtung vorgesehen ist, die bei laufender Getriebewelle (18) den Entlüftungskanal (60, 84) schließt und bei stehender Getriebewelle (18) den Entlüftungskanal (60, 84) öffnet.

2. Entlüftungseinrichtung nach Anspruch 1, **dadurch gekennzeichnet, dass** das Getriebegehäuse (16) ein Lastschaltgetriebe oder ein stufenloses Getriebe mit abgedichteten Eingangs- und/oder Ausgangswellen einschließt.

3. Entlüftungseinrichtung nach Anspruch 1 oder 2, **dadurch gekennzeichnet, dass** der Vorratsbehälter (40) durch ein dem Getriebegehäuse (16) nachgeordnetes Fahrzeugachsgehäuse (30), in dem sich vorzugsweise das Differentialgetriebe einer angetriebenen Fahrzeugachse befindet, gebildet ist.

4. Entlüftungseinrichtung nach einem der vorstehenden Ansprüche, **dadurch gekennzeichnet, dass** eine Luftpumpe (26) zur Aufrechterhaltung eines Überdrucks im Getriebegehäuse (16) vorgesehen ist, die vorzugsweise durch eine Getriebewelle (18) angetrieben wird.

5. Entlüftungseinrichtung nach einem der vorstehenden Ansprüche, **dadurch gekennzeichnet, dass** der Entlüftungskanal (84) in etwa horizontal derart in eine von Schmier- oder Kühlflüssigkeit durchströmte Fallleitung (80) mündet, dass dieser Flüssigkeitsstrom den Entlüftungskanal (84) verschließt.

6. Entlüftungseinrichtung nach Anspruch 5, **dadurch gekennzeichnet, dass** die Fallleitung (80) mit einer durch eine Getriebewelle (18) angetriebene Hydraulikpumpe (72) versorgt wird.

7. Entlüftungseinrichtung nach Anspruch 6, **dadurch gekennzeichnet, dass** die Hydraulikpumpe (72) der Versorgung eines hydraulischen Verbrauchers (76) dient und ein Teilstrom der Hydraulikflüssigkeit für die Fallleitung (80) abgezweigt wird.

8. Entlüftungseinrichtung nach einem der vorhergehenden Ansprüche, **dadurch gekennzeichnet, dass** in dem Entlüftungskanal (60) ein Entlüftungsventil (62) angeordnet ist, welches bei laufender Getriebewelle (18) schließt und bei stehender Getriebewelle (18) öffnet.

9. Entlüftungseinrichtung nach Anspruch 8, **dadurch gekennzeichnet, dass** das Entlüftungsventil (62) hydraulisch derart durch den Flüssigkeitsversorgungsdruck des Getriebes gesteuert wird, dass es bei anstehendem Druck schließt und bei fehlendem Druck durch die Kraft einer Rückstellfeder (66) öffnet.

10. Entlüftungseinrichtung nach Anspruch 8 oder 9, **dadurch gekennzeichnet, dass** durch eine Getriebewelle (18) eine hydraulische Versorgungspumpe (20) angetrieben wird, deren Ausgangsdruck ganz oder teilweise auf das Entlüftungsventil (62) einwirkt.

11. Entlüftungseinrichtung nach einem der vorstehenden Ansprüche, **dadurch gekennzeichnet, dass** der Entlüftungskanal (60, 84) zwischen dem Getriebegehäuse (16) und einem Fahrzeugachsgehäuse (30) angeordnet ist.

## Claims

1. Venting system for a gearbox (16), through which at least one gear shaft (18) extends and which has a collection area located at a low level, in which liquid lubricant and/or coolant collects and which connects via at least one connection duct (5) to a reservoir (40) that is otherwise substantially sealed relative to the gearbox (16), wherein the liquid in the collection area is pressed through the connection duct (5) into the reservoir (40) as a result of an excess pressure prevailing in the gearbox (16), **characterised in that** in the gearbox (16) above the collection area a vent duct (60, 84) with a shutoff means is provided, which closes the vent duct (60, 84) when the gear shaft (18) is running and opens the vent duct (60, 84) when the gear shaft (18) is stationary.

2. Venting system according to Claim 1, **characterised in that** the gearbox (16) encloses a power shift gear or an infmitely variable gear with sealed input and/or output shafts.

3. Venting system according to Claim 1 or 2, **characterised in that** the reservoir (40) is formed by a vehicle axle casing (16), which is connected downstream of the gearbox (16) and in which preferably the differential gear of a driven vehicle axle is located.

4. Venting system according to one of the preceding claims, **characterised in that** an air pump (26), which is preferably driven by a gear shaft (18), is provided to maintain an excess pressure in the gearbox (16).

5. Venting system according to one of the preceding claims, **characterised in that** the vent duct (84) opens approximately horizontally into a down-feed line (80) with liquid lubricant or coolant passing through it, such that this liquid flow shuts off the vent duct (84).

6. Venting system according to Claim 5, **characterised in that** the down-feed line (80) is fed with a hydraulic pump (72) driven by a gear shaft (18).

7. Venting system according to Claim 6, **characterised in that** the hydraulic pump (72) serves to feed a hydraulic power user (76) and a component flow of the hydraulic fluid is branched off for the down-feed line (80).

8. Venting system according to one of the preceding claims, **characterised in that** a venting valve (62) is arranged in the vent duct (60) and closes when the gear shaft (18) is running and opens when the gear shaft (18) is stationary.

9. Venting system according to Claim 8, **characterised in that** the venting valve (62) is hydraulically controlled by the fluid supply pressure of the gear such that it closes when pressure is present and opens through the force of a restoring spring (66) when pressure is absent.

10. Venting system according to Claim 8 or 9, **characterised in that** a hydraulic feed pump (20) is driven by a gear shaft (18), the output pressure of which feed pump acts completely or partially on the venting valve (62).

11. Venting system according to one of the preceding claims, **characterised in that** the vent duct (60, 84) is arranged between the gearbox (16) and a vehicle axle casing (30).

## Revendications

1. Dispositif de ventilation pour une boîte de vitesses (16), à travers laquelle passe au moins un arbre de transmission (18) et qui comporte un collecteur situé en profondeur, dans lequel s'accumule le liquide de lubrification et/ou de refroidissement et qui communique par l'intermédiaire d'au moins un conduit de liaison (50) avec un réservoir (40), rendu sensiblement étanche pour le reste par rapport à la boîte de vitesses (16), le liquide dans le collecteur étant poussé, sous l'effet de la surpression qui règne dans la boîte de vitesses (16), à travers le conduit de liaison (50) dans le réservoir (40), **caractérisé en ce qu'**il est prévu dans la boîte de vitesses (16), au-dessus du collecteur, un conduit de ventilation (60, 84) avec un dispositif de fermeture, qui ferme le conduit de ventilation (60, 84) lorsque l'arbre de transmission (18) est en mouvement et ouvre le conduit de ventilation (60, 84) lorsque l'arbre de transmission (18) est à l'arrêt.

2. Dispositif de ventilation selon la revendication 1, **caractérisé en ce que** la boîte de vitesses (16) inclut une transmission à passage sous charge ou une transmission à variation continue avec des arbres d'entrée et/ou de sortie rendus étanches.

3. Dispositif de ventilation selon la revendication 1 ou 2, **caractérisé en ce que** le réservoir (40) est formé par un carter d'essieu (30), qui est monté en aval de la boîte de vitesses (16) et dans lequel est situé de préférence le différentiel d'un essieu de véhicule entraîné.

4. Dispositif de ventilation selon l'une quelconque des revendications précédentes, **caractérisé en ce qu'**il est prévu une pompe à air (26), qui est destinée à maintenir une surpression dans la boîte de vitesses (16) et qui est actionnée de préférence par un arbre de transmission (18).

5. Dispositif de ventilation selon l'une quelconque des revendications précédentes, **caractérisé en ce que** le conduit de ventilation (84) débouche à peu près horizontalement dans un tuyau de descente (80) traversé par le liquide de lubrification ou de refroidissement, de telle sorte que ce flux de liquide ferme le conduit de ventilation (84).

6. Dispositif de ventilation selon la revendication 5, **caractérisé en ce que** le tuyau de descente (80) est alimenté par une pompe hydraulique (72) actionnée par un arbre de transmission (18).

7. Dispositif de ventilation selon la revendication 6, **caractérisé en ce que** la pompe hydraulique (72) est utilisée pour alimenter un consommateur hydraulique (76) et dérive une partie du flux du liquide hydraulique pour le tuyau de descente (80).

8. Dispositif de ventilation selon l'une quelconque des revendications précédentes, **caractérisé en ce que** dans le conduit de ventilation (60) est agencée une vanne de ventilation (62) qui ferme lorsque l'arbre de transmission (18) est en mouvement et ouvre lorsque l'arbre de transmission (18) est à l'arrêt.

9. Dispositif de ventilation selon la revendication 8, **caractérisé en ce que** la vanne de ventilation (62) est commandée par voie hydraulique par la pression d'alimentation en liquide de l'engrenage, de telle sorte qu'elle ferme lorsque la pression est appliquée et ouvre en l'absence de pression, sous l'effet de la force d'un ressort de rappel (66).

10. Dispositif de ventilation selon la revendication 8 ou 9, **caractérisé en ce qu'**une pompe d'alimentation (20) hydraulique, dont la pression de sortie agit totalement ou partiellement sur la vanne de ventilation (62), est actionnée par un arbre de transmission (18).

11. Dispositif de ventilation selon l'une quelconque des revendications précédentes, **caractérisé en ce que** le conduit de ventilation (60, 84) est agencé entre la boîte de vitesses (16) et un carter d'essieu (30).
